# EUROPÄISCHE PATENTANMELDUNG

(11) **EP 1 674 321 A2**
(43) Veröffentlichungstag der Anmeldung: **28.06.2006**
(21) Anmeldenummer: 05027043.8
(22) Anmeldetag: 10.12.2005
(51) Int. Cl.: B60K 28/10, F02N 11/10, F16D 48/10

(54) **Anlasserfreigabe**

(30) Priorität: 23.12.2004 DE 102004061954
(71) Anmelder: LuK Lamellen und Kupplungsbau Beteiligungs KG, 77815 Bühl (DE)
(72) Erfinder: Schweizer, Alexander, 77815 Bühl (DE); Stengel, Frank, 76534 Baden-Baden (DE); Fuß, Martin, Wooster 44691 Ohio (US); Ehrlich, Matthias, 77815 Bühl (DE); Nazari, Behzad, Dr., 72622 Nürtingen (DE); Martin, Jens, 76547 Sinzheim-Kartung (DE); Hirt, Joachim, 77704 Oberkirch (DE); Zimmermann, Martin, 77880 Sasbach (DE)

(57) **Zusammenfassung**

Es liegt die Aufgabe zugrunde, ein Verfahren und eine Vorrichtung vorzuschlagen, womit die Wahrscheinlichkeit eines sicherheitskritischen Sich-in-Bewegung-Setzens eines Kraftfahrzeugs nach Inbetriebnahme weiter reduziert wird.

## Beschreibung

Die vorliegende Erfindung betrifft ein Verfahren mit den Merkmalen gemäß dem Oberbegriff von Anspruch 1 sowie eine Vorrichtung mit den Merkmalen gemäß dem Oberbegriff von Anspruch 12.

Vorrichtungen in Kraftfahrzeugen, die Komfort und Sicherheit beim Fahrbetrieb erhöhen, sind allgemein bekannt. Beispielsweise wurden im Zusammenhang mit der Anlasserfreigabe zahlreiche Checks und Sicherheitsabfragen vorgeschlagen. In der DE 197 32 924 A1 wird eine Vielzahl von Kombinationen von Zuständen von Fahrzustandsgrößen vorgestellt, die entweder zur Anlasserfreigabe führen oder eine Anlasserfreigabe verbieten. Eine solche Fahrzustandsgröße ist beispielsweise die Getriebestellung. Dabei wird insbesondere detektiert, ob die Neutralstellung eingelegt ist. Weitere Fahrzustandsgrößen können aus einer Fahrzeugbremse oder einem Drehmomentübertragungssystem abgeleitet werden. Auch das Abfragen von Schaltabsichtssignalen kann in die Beurteilung, ob eine Anlasserfreigabe zugelassen wird oder nicht mit einbezogen werden. Bei Vorliegen bestimmter Zustände einer oder mehrerer Fahrzustandsgrößen können automatisiert Aktionen veranlasst werden, sodass anschließend eine sichere Anlasserfreigabe gewährleistet ist. Wird beispielsweise eine nicht eingelegte Neutralstellung detektiert, wird automatisiert eine Bremse betätigt und das Drehmomentübertragungssystem automatisiert ausgerückt, erst dann wird eine Anlasserfreigabe zum Motorstart erteilt.

In der DE 199 00 820 A1 wird eine Servounterstützungseinrichtung vorgestellt, die einen Anlasser zum Start einer Brennkraftmaschine erst betätigt, wenn die Neutralposition eingestellt oder eine Kupplung vollständig ausgerückt ist.

In der DE 103 20 280 A1 ist ein Verfahren und eine Vorrichtung zum Betrieb eines automatischen beziehungsweise automatisierten Getriebes mit Parksperre beziehungsweise Wegrollsicherung dargestellt. Ein Verfahren zur Freigabe eines Anlassvorgangs bei einem mit einem automatisierten Schaltgetriebe ausgerüsteten Fahrzeug, offenbart folgende Verfahrensschritte: Zunächst wird überprüft, ob die Zündung ein- und der Motor ausgeschaltet und die Bremse betätigt ist. Ist dies der Fall, wird überprüft, ob die Kupplung ausgerückt ist. Falls ja, wird der Anlasserbetrieb freigegeben. Handelt es sich um ein Fahrzeug mit automatisiertem Schaltgetriebe mit Parksperre, werden folgende Verfahrensschritte vorgeschlagen: Zunächst wird überprüft, ob die Zündung eingeschaltet und die Parksperre eingelegt ist. Bei Vorliegen eines Anlasswunsches wird der Anlasser aktiviert. Bei einem Doppelkupplungsgetriebe wird das Ausrücken beider Kupplungen überprüft.

Aus Sicherheitsgründen können bei Doppelkupplungsgetrieben vorteilhafterweise nicht selbsthemmende Kupplungsaktoriken verwendet werden, die aufgrund von Federeinrichtungen stromlos in den Zustand "Kupplung Auf' fahren. Diese Eigenschaft einer Kupplung wird auch als "normally open" oder "zwangsweise offen" bezeichnet. Bei Doppelkupplungsgetrieben ist dieser Kupplungstyp deshalb bevorzugt geeignet, weil bei Schließen beider Kupplungen schwere Schäden im Getriebe und an den Kupplungen auftreten können, wenn zwei unterschiedliche Übersetzungsverhältnisse auf ein und dieselbe Getriebeausgangswelle wirken. Aus diesem Grund gilt bei Doppelkupplungsgetrieben in sicherheitskritischen Situationen grundsätzlich das Prinzip beide Kupplungen zu öffnen. Bei automatisierten Schaltgetrieben oder auch Handschaltgetrieben hingegen gilt in sicherheitskritischen Situationen grundsätzlich das Konzept, die Kupplungseinstellung nicht zu verändern. Aus diesem Grunde sind Fahrzeuge mit nur einer Kupplung zumeist mit dem selbsthemmenden Kupplungstyp ausgestattet, der in seinem Grundzustand geschlossen ist. Dies wird auch als "normally closed" oder "zwangsweise geschlossen" bezeichnet.

Die in diesem Zusammenhang erforderlichen Streckenmessungen werden durch einen Sensor ausgeführt. Dies kann durch einen Wegsensor direkt als Absolutwegmessung, Inkrementalwegmessung oder Differenzwegmessung an der Kurbelwelle erfolgen. Mit einem bürstenlosen EC-Motor, der die Kupplungsaktorik antreibt, kann beispielsweise auch die Inkrementalwegmessung ausgeführt werden, so dass bei einer typischen Länge von 20 mm des Aktorik-Gesamtweges beispielsweise eine Referenziergenauigkeit von weniger als 0,2 mm also von 1 Prozent des Gesamtweges erreicht werden kann.

Wird die Kupplungsaktorik in eine vorgegebene Position gefahren und dort eine zeitlang belassen, so spricht man vom "Abstellen" der Kupplung an dieser Position.

Um das Fahrzeug zu starten bzw. abzuschalten wird eine Initialisierungseinrichtung verwendet, die beispielsweise in Form eines Zündschlosses mit Zündschlüssel oder auch in Form eines Tasters oder Schalters mit Karte ausgelegt sein kann. Durch Drehen des Zündschlüssels bzw. durch Drücken des Tasters kann das Fahrzeug durch den Fahrer vor jeder Fahrt in Betrieb genommen und am Ende jeder Fahrt stillgelegt werden.

Der vorliegenden Erfindung liegt die Aufgabe zugrunde, ein Verfahren und eine Vorrichtung vorzuschlagen, die die Wahrscheinlichkeit von sicherheitskritischen Zuständen im Zusammenhang mit der Anlasserfreigabe weiter reduzieren können. Als sicherheitskritisch ist insbesondere ein unerwartetes sofortiges Sich-in-Bewegung-Setzen des Fahrzeugs nach Inbetriebnahme anzusehen.

Diese Aufgabe wird durch ein Verfahren mit den Merkmalen gemäß Anspruch 1 sowie durch eine Vorrichtung mit den Merkmalen gemäß Anspruch 12 gelöst.

Erfindungsgemäß wird die Anlasserfreigabe erst gegeben, wenn zwei Bedingungen erfüllt sind, nämlich dass die Parksperre eingelegt und die Kupplung - im Fall eines Doppelkupplungsgetriebes beide Kupplungen - geöffnet sind. Hinsichtlich der Sicherheit ist damit eine Redundanzforderung erfüllt, nämlich dass jede der beiden Bedingungen für sich hinreichend ist, eine Bewegung des Fahrzeugs nach Inbetriebnahme zu verhindern.

Zur Überprüfung, ob beide Kupplungen offen sind, wird erfindungsgemäß folgende Strategie vorgeschlagen: Wird das Fahrzeug abgestellt, wird beim Stilllegen der Kupplungsaktor - im Fall eines Doppelkupplungsgetriebes beide Kupplungsaktoren - eine vorgegebene Strecke vom Anschlag "Kupplung Auf' entfernt positioniert. Der bzw. die Aktoren bleiben in dieser Position bis das Fahrzeug wieder gestartet wird. Nach Inbetriebnahme wird mit dem Aktor bzw. den Aktoren Richtung "Kupplung Auf' verfahren bis ein Anschlag erkannt wird. Wird der Anschlag nach einer erwarteten Strecke erreicht, so gilt der Zustand, dass die Kupplung bzw. die Kupplungen offen sind, als eingetreten. Wird der Anschlag nicht an der erwarteten Position gefunden oder im Fall eines Doppelkupplungsgetriebes nur von einem der beiden Aktoren, muss die Aktorik auf Funktion überprüft werden, was zu einer Verzögerung der Anlasserfreigabe führt. Fällt die Diagnose plausibel aus, wird eine Anlasserfreigabe gegeben. Das beschriebene Verfahren insbesondere das Abstellen an einer vorgegebenen Position eignet sich insbesondere für eine selbsthemmende Kupplungsaktorik, bei der jede Veränderung der Aktorstellung elektrisch erfolgt. Ist die Aktorik nicht selbsthemmend wird sie vorteilhafterweise beim Stilllegen genau am Anschlag "Kupplung Auf" abgestellt, da bei abgeschaltetem Elektromotor - der, wenn das Fahrzeug in Betrieb ist, zur Bewegung der Aktorik dient - eine Federeinrichtung die Kupplung in den geöffneten Zustand bringt. Zur Verifikation der Aktorik kann dann bei Inbetriebnahme zuerst um die vorgegebene Strecke in Richtung geschlossene Kupplung gefahren und dann von dort aus der Anschlag gesucht werden.

Mit dem erfindungsgemäßen Verfahren und der erfindungsgemäßen Vorrichtung kann sichergestellt werden, dass im Fall eines Doppelkupplungsgetriebes beide Kupplungen geöffnet und im Rahmen der durchgeführten Überprüfung in funktionsfähigem Zustand sind bevor die Anlasserfreigabe gegeben wird.

Weitere Vorteile und vorteilhafte Ausgestaltungen der Erfindung sind Gegenstand der nachfolgenden Figuren sowie deren Beschreibung.

### Es zeigen im Einzelnen:

Figur 1: Schematisch den erfindungsgemäßen Verfahrensverlauf.

Figur 2: Schematische Darstellung der zusammenwirkenden Komponenten.

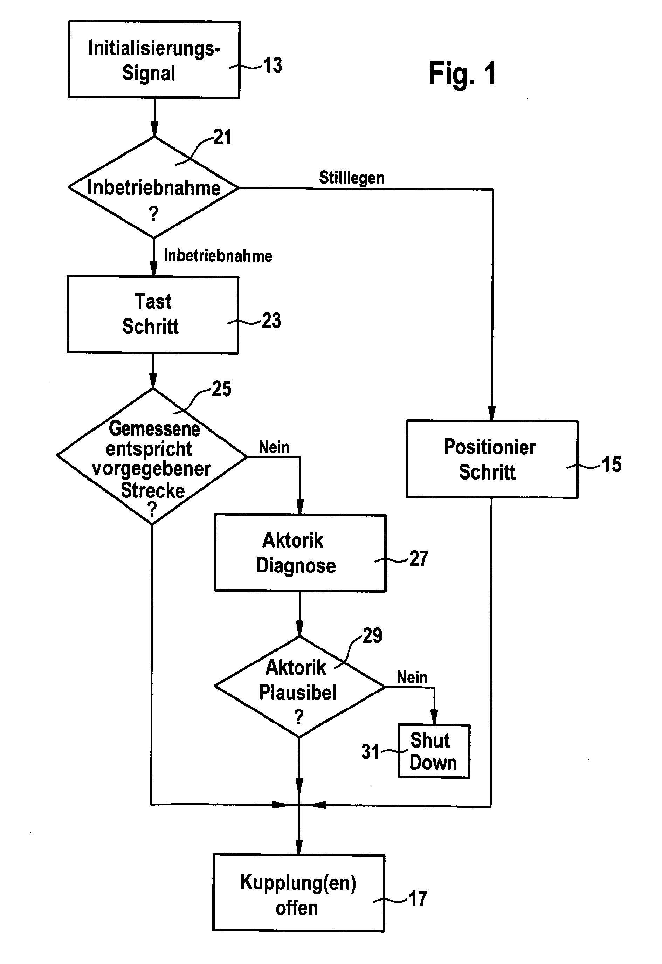

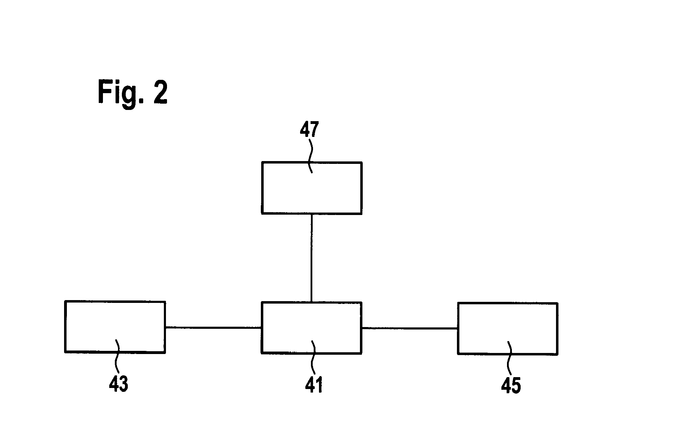

In einem Flussdiagramm gemäß Figur 1 ist zur Veranschaulichung des Verfahrens zur sicheren Anlasserfreigabe der Verfahrensablauf schematisch dargestellt. Das Verfahren kommt im Kraftfahrzeug immer dann zum Einsatz, wenn ein Initialisierungssignal 13 - das kann entweder "Stilllegen" oder "Inbetriebnahme" sein - von der Initialisierungseinrichtung 43 (Fig. 2) ausgeht, d.h. wenn der Fahrer mittels der Initialisierungseinrichtung 43 anzeigt, dass er das Fahrzeug abschalten oder starten möchte. Wird der Wagen gestartet, findet also ein Wechsel von "Stillgelegt" nach "Inbetriebnahme" 21 statt, wird erfindungsgemäß der Tastschritt 23 ausgeführt. Im Falle einer selbsthemmenden Kupplung wird dabei mit der Aktorik in Richtung "Kupplung Auf' gefahren, bis ein Anschlag erkannt wird und die gefahrene Strecke gemessen. Handelt es sich um eine nicht selbsthemmende Kupplungsaktorik, wird zunächst die vorgegebene Strecke in Richtung "Kupplung Zu" gefahren und dann von dort aus der Anschlag "Kupplung Auf' gesucht und die Entfernung gemessen. Die im Tastschritt 23 gemessene Strecke wird nun im Vergleichsschritt 25 mit der vorgegebenen Strecke verglichen. Im Falle einer Doppelkupplung werden die von beiden Aktoren gefahrenen Strecken separat gemessen und zwei Vergleiche durchgeführt. Entsprechen sich gemessene und vorgegebene Strecke innerhalb eines Toleranzbereiches von 2 Prozent des gesamten Aktorweges wird der Zustand "Kupplung Auf' als bestätigt erachtet. Weichen gemessene und vorgegebene Strecke stärker als durch den Toleranzbereich vorgegeben voneinander ab, so muss die Aktorik im Diagnoseschritt 27 einer Überprüfung auf Fehlerhaftigkeit unterworfen werden. Verhält sich die Aktorik plausibel 29, wird wieder der Zustand "Kupplung Auf' 17 als erfüllt angesehen. Verhält sie sich nicht plausibel, wird die Anlasserfreigabe nicht erteilt, stattdessen ein Shut-Down 31 durchgeführt. Bei einer Doppelkupplung müssen immer beide Kupplungen das beschriebene Verfahren durchlaufen und die genannten Bedingungen erfüllen. Ausgehend vom Normalbetrieb, wie er bei Autobahn- oder Landstraßenfahrten bzw. im Stadtverkehr vorliegt, wird, wenn der Fahrer das Kraftfahrzeug zum Stillstand gebracht hat und es abstellen und ausschalten will und zu dem Zweck mit der Initialisierungseinrichtung 43 (Fig. 2) einen Wechsel von "In Betrieb" nach "Stillgelegt" 21 durchführt, erfindungsgemäß der Positionierschritt 15 ausgeführt. Handelt es sich um eine selbsthemmende Kupplungsaktorik, bei der jede Bewegung der Aktorik durch einen Elektromotor bewirkt wird, wird sie dabei auf eine Position, die die vorgegebene Strecke vom Anschlag "Kupplung Auf' in Richtung geschlossener Kupplung entfernt ist, gefahren. Im Falle einer nicht selbsthemmenden Aktorik wird diese im Positionierschritt 15 genau am Anschlag "Kupplung Auf' abgestellt, indem nach Stilllegen des Fahrzeugs der Aktor durch Beaufschlagung durch einen Energiespeicher wie beispielsweise eine Federeinrichtung an den Anschlag "Kupplung Auf" gefahren wird. Im Falle einer Doppelkupplung wird das beschriebene Verfahren mit beiden Kupplungen durchgeführt.

Figur 2 stellt schematisiert die Vorrichtung zur Freigabe eines Anlassvorgangs in einem Kraftfahrzeug sowie weitere beteiligte und zusammenwirkende Fahrzeugkomponenten dar. Stellt der Fahrer seinen Wagen ab und versetzt das Fahrzeug mit der Initialisierungseinrichtung 43 in den stillgelegten Zustand geht diese Information auch an die Steuereinrichtung 41. Erfindungsgemäß wird daraufhin der Positionierschritt 15 (Fig. 1) ausgeführt. Handelt es sich um eine selbsthemmende Kupplungsaktorik, wird die Aktorik durch den sie bewegenden Motor eine vorgegebene Strecke vom Anschlag "Kupplung Auf" in Richtung geschlossener Kupplung bewegt und dort abgestellt. Im Falle einer nicht selbsthemmenden Aktorik bewirkt eine Federeinrichtung, die im Wirkbereich zwischen Kupplung beispielsweise den Tellerfederzungen und Aktorantrieb beispielsweise elektromotorischem Antrieb des Aktors angeordnet sein kann, ohne Zutun des Motors, dass die Kupplungsaktorik sich bis zum Anschlag "Kupplung Auf' bewegt. Wird der Wagen durch Inbetriebnahme 21 (Fig. 1) wieder gestartet, wird dies von der Initialisierungseinrichtung 43 an die Steuereinrichtung 41 weitergemeldet. Bei Inbetriebnahme sorgt die Steuereinrichtung 41 dafür, dass der Tastschritt 23 (Fig. 1) ausgeführt wird. Im Fall einer selbsthemmenden Kupplungsaktorik 45 veranlasst die Steuereinrichtung 41 den Aktormotor die Kupplungsaktorik in Richtung "Kupplung Auf' zu fahren, gleichzeitig veranlasst sie einen Sensor 47 die Strecke zu messen, bis der Anschlag "Kupplung Auf" erreicht ist. Anschließend wird durch die Steuereinrichtung 41 der gemessene und vorgegebene Wert verglichen. Entsprechen sich gemessene und vorgegebene Strecke im Rahmen eines Toleranzbereiches wird der Zustand "Kupplung Auf' als bestätigt erachtet. Hat sich beispielsweise, während das Fahrzeug stillgelegt war, die Position der Kupplungsaktorik 45 um mehr als den Toleranzbereich verändert, entsprechen sich gemessene und vorgegebene Strecke nicht mehr und es muss die Steuereinrichtung 41 eine Funktionsüberprüfung der Aktorik im Diagnoseschritt 27 veranlassen. Eine Nichtübereinstimmung von gemessener und vorgegebener Strecke kann beispielsweise auftreten, wenn im Tastschritt 23 (Fig. 1) der Anschlag "Kupplung Auf' nur vermeintlich erreicht ist, wenn beispielsweise die Reibung kurz vor Erreichen des Anschlags "Kupplung Auf" stark ansteigt und so das Erreichen des Anschlages vortäuscht. Handelt es sich um eine nicht selbsthemmende Kupplungsaktorik 45, veranlasst die Steuereinrichtung 41 den Aktormotor die Kupplungsaktorik 45 zunächst um die vorgegebene Strecke in Richtung "Kupplung Zu" zu fahren. Dort stoppt die Steuereinrichtung 41 den Aktormotor und veranlasst ihn, die Kupplungsaktorik nun in umgekehrter Richtung in Richtung "Kupplung Auf' zu bewegen. In dieser Bewegungsrichtung veranlasst die Steuereinrichtung 41 den Sensor 47 den zurückgelegten Weg zu messen bis der Anschlag "Kupplung Auf" erreicht ist. Durch die Steuereinrichtung 41 werden gemessene und vorgegebene Strecke verglichen: Entsprechen sich gemessene und vorgegebene Strecke im Rahmen des Toleranzbereiches, wird die nicht selbsthemmende Kupplung 45 als im Zustand "Kupplung Auf' erachtet. Eine Nichtübereinstimmung der beiden Strecken, also eine Abweichung der beiden Strecken von mehr als dem Toleranzbereich kann auftreten, wenn entweder im Positionierschritt 15 (Fig. 1) oder im Tastschritt 23 (Fig. 1) der Anschlag "Kupplung Auf" nur vermeintlich erreicht ist. Bei Nichtübereinstimmung der Strecken wird eine Überprüfung der Funktionsfähigkeit der Kupplung im Diagnoseschritt 27 durchgeführt.

### Bezugszeichenliste

- 13: Initialisierungssignal
- 15: Positionierschritt
- 17: Verfahrensschritt
- 19: Verfahrensschritt
- 21: Verfahrensschritt
- 23: Tastschritt
- 25: Vergleichsschritt
- 27: Diagnoseschritt
- 29: Verfahrensschritt
- 31: Verfahrensschritt
- 41: Steuereinrichtung
- 43: Initialisierungseinrichtung
- 45: Kupplungsaktorik
- 47: Sensor

## Patentansprüche

1. Verfahren zur Steuerung eines Kraftfahrzeugs mit einer Initialisierungseinrichtung (43) zur Inbetriebnahme und einer mittels einer Kupplungsaktorik (45) betätigten Kupplung zwischen einer Antriebseinheit und einem Getriebe, mit einer Steuereinrichtung (41), mittels derer zumindest eine Steuerung der Kupplungsaktorik (45) und eine Erfassung von Messdaten eines Sensors (47) zur Ermittlung der Stellung der Kupplung erfolgt, **dadurch gekennzeichnet, dass** zur Verifikation des Zustandes "Kupplung Auf" bei der Inbetriebnahme eine vor oder beim Stilllegen eingestellte und abgespeicherte Positionierung der Kupplungsaktorik (45) mit einer während eines vorgegebenen Bewegungsablaufs der Kupplungsaktorik (45) nach Inbetriebnahme mittels einer Streckenmessung, die zumindest in einem Teilbereich dieses Bewegungsablaufs erfolgt, erfassten Positionierung verglichen wird, wobei der Zustand "Kupplung Auf' insbesondere dann erkannt wird, wenn die Größe des Vergleichs in einem vorgegebenen Toleranzbereich ist.

2. Verfahren nach Anspruch 1, **dadurch gekennzeichnet, dass** eine selbsthemmende Kupplungsaktorik (45) vor oder beim Stilllegen (13) eine vorgegebene Strecke vom Anschlag "Kupplung Auf" in Richtung "Kupplung Zu" entfernt positioniert wird (15).

3. Verfahren nach Anspruch 1, **dadurch gekennzeichnet, dass** sich eine nicht selbsthemmende Kupplungsaktorik (45) vor oder beim Stilllegen (13) an den Anschlag "Kupplung Auf' bewegt (15).

4. Verfahren nach Anspruch 2, **dadurch gekennzeichnet, dass** bei der Inbetriebnahme (21) mit der selbsthemmenden Kupplungsaktorik (45) in Richtung "Kupplung Auf" gefahren und die gefahrene Strecke gemessen wird bis ein Anschlag erkannt wird.

5. Verfahren nach einem der Ansprüche 3 oder 4, **dadurch gekennzeichnet, dass** bei der Inbetriebnahme (21) mit der nicht selbsthemmenden Kupplungsaktorik (45) eine vorgegebene Strecke in Richtung "Kupplung Zu" gefahren, dann gestoppt und dann in anderer Richtung, in Richtung "Kupplung Auf" zurückgefahren und die zurückgefahrene Strecke gemessen wird, bis ein Anschlag erkannt wird (23).

6. Verfahren nach einem der Ansprüche 2, 4 und 5, **dadurch gekennzeichnet, dass** Bewegung und Positionierung der Aktorik mit einem Aktormotor elektrisch erfolgen.

7. Verfahren nach Anspruch 3, **dadurch gekennzeichnet, dass** eine Rückstellbewegung der Aktorik in Richtung "Kupplung Auf" mittels Beaufschlagung durch einen Energiespeicher wie etwa einer Federeinrichtung erfolgt.

8. Verfahren nach einem der Ansprüche 4 oder 5, **dadurch gekennzeichnet, dass** die Kupplung als geöffnet betrachtet wird, wenn die Abweichung der gemessenen Strecke von der vorgegebenen Strecke innerhalb eines vorgegebenen Toleranzbereiches liegt (25).

9. Verfahren nach einem der Ansprüche 4 oder 5, **dadurch gekennzeichnet, dass** die Kupplung einem Diagnoseverfahren (27) unterzogen wird, wenn die Abweichung der gemessenen Strecke von der vorgegebenen Strecke nicht innerhalb des vorgegebenen Toleranzbereiches liegt (25).

10. Verfahren nach Anspruch 9, **dadurch gekennzeichnet, dass** keine Anlasserfreigabe gegeben wird (31), wenn das Diagnoseverfahren ein unplausibles Aktorikverhalten feststellt (29).

11. Verfahren nach einem der vorhergehenden Ansprüche, **dadurch gekennzeichnet, dass** die Verfahrensschritte auf beide Kupplungen anzuwenden sind, wenn es sich um ein Doppelkupplungsgetriebe handelt.

12. Vorrichtung zur Steuerung eines Kraftfahrzeugs mit einer Initialisierungseinrichtung (43) zum Inbetriebnehmen und Stilllegen des Fahrzeugs und einer mittels einer Kupplungsaktorik (45) betätigten Kupplung zwischen einer Antriebseinheit und einem Getriebe, mit einer Steuereinrichtung (41), mittels derer zumindest eine Steuerung der Kupplungsaktorik (45) und eine Erfassung von Messdaten eines Sensors (47) zur Ermittlung der Stellung der Kupplung erfolgt, **dadurch gekennzeichnet, dass** die Steuereinrichtung so ausgeführt ist, dass mit ihr ein Vergleich einer vor oder beim Stilllegen eingestellten und abgespeicherten Positionierung der Kupplungsaktorik (45) mit einer während eines vorgegebenen Bewegungsablaufs der Kupplungsaktorik (45) nach Inbetriebnahme mittels einer Streckenmessung, die zumindest in einem Teilbereich dieses Bewegungsablaufs erfolgt, erfassten Positionierung durchgeführt wird.
